Europäisches Patentamt

European Patent Office

Office européen des brevets

(11) Publication number: **0 089 842**
**B1**

(12) **EUROPEAN PATENT SPECIFICATION**

(45) Date of publication of patent specification: **03.10.90**

(21) Application number: **83301558.9**

(22) Date of filing: **21.03.83**

(51) Int. Cl.⁵: **H 01 M 4/56, H 01 M 4/14, C 01 G 21/08**

(54) Lead acid electric storage cell and a positive electrode therefor.

(30) Priority: **22.03.82 GB 8208326**
**06.08.82 GB 8222739**
**20.12.82 GB 8236203**

(43) Date of publication of application:
**28.09.83 Bulletin 83/39**

(45) Publication of the grant of the patent:
**03.10.90 Bulletin 90/40**

(84) Designated Contracting States:
**DE FR**

(56) References cited:
**DE-C-2 827 107    GB-A-2 023 558**
**FR-A- 544 766     US-A-2 677 713**
**GB-A-1 307 221    US-A-3 909 292**
**GB-A-2 013 391    US-A-4 252 872**

**J. APPL. CHEM., vol. 16, June 1966, pages
180-184; N.E. BAGSHAW et al.: "The preparation
of lead dioxide for X-ray diffraction studies"**

The file contains technical information
submitted after the application was filed and
not included in this specification

(73) Proprietor: **UNITED KINGDOM ATOMIC
ENERGY AUTHORITY**
**11 Charles II Street**
**London SW1Y 4QP (GB)**

(72) Inventor: **Moseley, Patrick Timothy**
**Ivy Cottage South Row**
**Chilton Oxfordshire (GB)**
Inventor: **Hill, Michael Raphael Hugh**
**15 Bryan Way Charlton Heights**
**Wantage Oxfordshire (GB)**
Inventor: **Bridger, Nevill John**
**Bramble End Orchard Close**
**Hermitage Berkshire (GB)**

(74) Representative: **Mansell, Keith Rodney**
**Patents Branch United Kingdom Atomic Energy
Authority 11 Charles II Street**
**London SW1Y 4QP (GB)**

(56) References cited:

**ELECTROCHIMICA ACTA, vol. 26, no. 10, 1981,
pages 1435-1438, Pergamon Press Ltd., GB; P.
FABER: "Über ein chemisches Verfahren zur
Herstellung von elektrochemisch aktivem Blei-
IV-Oxid"**

Courier Press, Leamington Spa, England.

(56) References cited:

Journal of the Electrochemical Society, Vol. 120,
No. 11, November 1973, pp 1515-1516

Journal of the Electrochemical Society, Vol. 122,
No. 4, April 1975, pp 461-466

Journal of the Electrochemical Society, Vol. 130,
No. 4, April 1983, pp. 829-834

Paper prepared for the ILZRO Battery Research
Meeting at Munich, Germany, May 6, 1980,
A.C.Simon et al.:"Different Forms of Lead
Dioxide"

Journal of Power Sources, 4 (1979) pp.203-213
Materials Science and Engineering, 28 (1977) pp.
167-199

**Description**

This invention relates to a lead acid electric storage cell.

In a well known method of manufacturing a lead acid electric storage cell, the positive electrode and thereof is made by mixing lead monoxide with water and sulphuric acid to form an active mass which is then pressed into a lead grid. The grid with the active mass is subsequently held in an environment of controlled humidity for 2—3 days—the "curing" process, and then subjected to a low charging current for a further 2—3 days to convert the active mass electrochemically to lead dioxide—the "formation" process. This known method is time consuming and relatively costly, and the invention is concerned with providing a much shorter method of manufacture that relies on the chemical preparation of beta lead dioxide in an acid medium.

Many references in the lead acid battery art state that chemically produced beta lead dioxide is electrochemically inert. See for example:

(1) Materials Science and Engineering, 28 (1977) pp 167—199, particularly page 187, "Materials and Mechanisms determining performance of Lead-Acid Storage Batteries", by Jeff Perkins, copyright, Elsevier Sequoia SA. Lausanne.

(2) Paper entitled "Different Forms of Lead Dioxide" particularly page 3, by A. C. Simon and S. M. Caulder, presented at the ILZRO Battery Research Meeting, Germany, 6 May 1980.

(3) Journal of the Electrochemical Society Vol. 120, No. 11, November 1973, pp 1515—1516, particularly page 1516, article entitled "The Hydrogen-Loss Concept of Battery Failure: The $PbO_2$ Electrode" by S. M. Caulder, J. S. Murray, and A. C. Simon.

(4) Journal of the Electrochemical Society, Vol. 122, No. 4, April 1975, pp 461—466, particularly page 463, article entitled "Structural Transformations of the $PbO_2$ Active Material during Cycling" by A. C. Simon, S. M. Caulder, and J. T. Stemmle.

(5) Journal of Power Sources, 4 (1979) pp 203—213, parrticularly page 209, copyright, Elsevier Sequoia SA, Lausanne, "Conductivity Measurements on Pure and Mixed Metal Dioxides", by Jean Brenet and Peter Faber.

(6) Journal of Power Sources, 4 (1979) pp 183—190, particularly page 188, copyright, Elsevier Sequoia SA, Lausanne, "Electrochemical Behaviour of Metallic Oxides", by Jean Brenet.

However, Electrochemica Acta, Vol. 26, No. 10, 1981, pp. 1435 to 1438 states that $PbO_2$ phases made by reacting lead sulphate in alkaline solution with ozone have the beta structure and are electrochemically active, and further states that reacting lead powder with ozone at a pH of 10—14 gives an active $\beta$-$PbO_{2.5}$. The paper further states that $Pb_{2.5}$ products obtained by precipitation from lead(II)acetate solutions of pH between 4 and 6 have the beta structure and only a low electrochemical activity. Also GB—A—2 023 558 describes eliminating the above-described wet formation stage in lead acid electric storage cell manufacture by using electrochemically active lead dioxide produced by the method described in the above-mentioned Electrochemica Acta paper.

The present invention provides a method of making a lead acid electric storage cell comprising the steps of

(i) chemically preparing particulate beta lead dioxide;

(ii) supporting the beta lead dioxide by a carrier therefor adapted to be located in the cell thereby to fabricate an electrode for the cell;

(iii) assembling a lead acid electric storage cell comprising a positive electrode constituted by said beta lead dioxide electrode, a negative electrode constituted by a second electrode, and an electrolyte for the cell, characterised in that, in step (i), the beta lead dioxide is prepared by reacting trilead tetroxide with nitric acid or by hydrolysing lead tetraacetate in acetic acid and is then mixed with either or both of a binder therefor and a particulate electrically conductive material inert to the electrochemical reactions inside the cell; and, in step (ii), the carrier comprises a permeable, electrically insulating tubular container for the beta lead dioxide and into which container a current collecting means extends, the beta lead dioxide having been mixed with at least the electrically conductive material, or the carrier comprises an electrically conductive support structure, the beta lead dioxide having been mixed with at least the binder.

Preferably, the beta lead dioxide is chemically prepared by reacting $Pb_3O_4$ with nitric acid in the range 3M to 6M at a temperature between 80°C and 100°C.

In applications of the invention wherein the beta lead dioxide is mixed with a binder therefor, the binder preferably comprises polytetrafluoroethylene (hereinafter referred to as "PTFE") but desirably not exceeding 20% by weight of the mixture. However, the proportion of beta lead dioxide in the mixture is desirably at least 50% by weight.

The positive electrode may with some advantage be subjected to an initial relatively short electric charge, to improve the electrical capacity of the positive electrode.

Advantageously, the lead acid electric storage cell includes a negative electrode manufactured by compacting fine lead metal about a carrier therefor.

The invention will be further described by way of example only with reference to the accompanying drawings, in which:—

Figure 1 shows a partly broken away side view of a representative of a positive electrode for a lead acid electric storage cell;

Figure 2 shows a diagrammatic sectional representation of a lead acid electric storage cell including the positive electrode of Figure 1; and

Figure 3 shows a graphical representation of a charge/discharge cycle of the positive electrode of Figure 1.

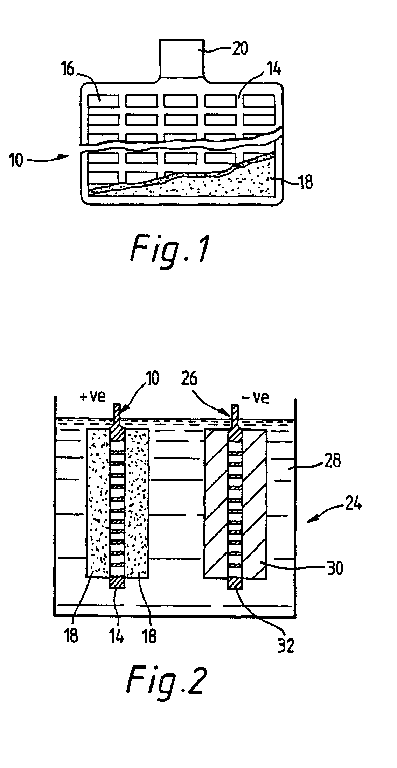

Referring now to Figure 1, a positive electrode 10 shown comprises, a conventional lead support grid 14 having a multiplicity of rectangular recesses 16 and to both sides of which (only one is shown in Figure 1) active material 18 has been applied. A tab 20 of the support grid 14 provides a terminal for current collection when, as shown in Figure 2, the positive electrode 10 is incorporated in an electric cell 24 having a lead negative electrode 26 and containing sulphuric acid as an electrolyte 28.

The active material 18 comprises beta lead dioxide mixed with PTFE as an inert binder. The active material 18 can be made on the lines suggested by Bagshaw, Clarke, and Halliwell in J. Appl. Chem. (1966) 16, 180, by suspending red lead (60 grammes) in 5M nitric acid (300 ml) at a temperature of between about 80—100°C, preferably about 95°C for about 15 minutes, the beta lead dioxide particulate product thereby formed subsequently being filtered and washed with water. The beta lead dioxide is then mixed with an aqueous slurry of PTFE, for example ICI "Fluon"® Grade GP1, and the mixture pressed about the sides of the support grid 14 to form the positive electrode 10. In some applications graphite powder, for example Hopkins & Williams No. 445000; might be mixed with the beta lead dioxide and PTFE.

Some results obtained using positive electrodes 10 of different compositions are shown in Table 1 below:—

TABLE 1

| Composition (grammes) | | | Discharge capacity Percentage of theoritical capacity |
|---|---|---|---|
| Beta Lead dioxide | PTFE | Graphite | |
| 24 | 8 | 7 | 15 |
| 24 | 5 | 0 | 12 |
| 48 | 10 | 18 | 4 |

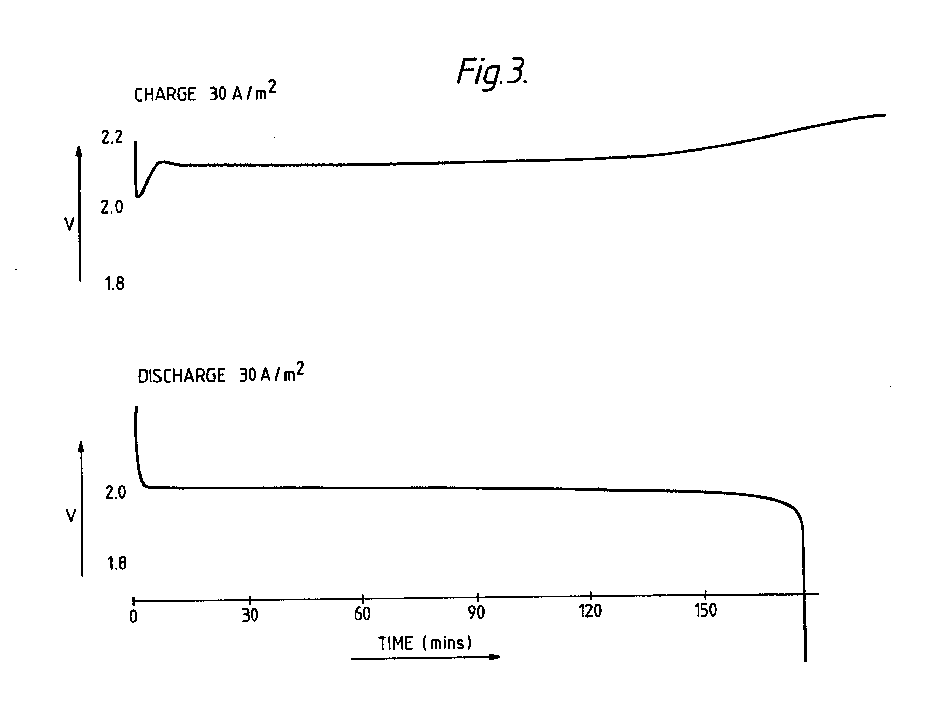

During subsequent cycling of about 40 deep discharge/charge cycles, the discharge capacities remained substantially constant, and the active material 18 adhered well to the support grid 14. A typical discharge/charge cycle for the positive electrode 10 is illustrated in Figure 3 to which reference, may be made.

The affect on discharge capacity of varying the temperature of the nitric acid when forming the beta lead dioxide can be seen in Table 2 below:—

TABLE 2

| Nitric acid strength (M) | Temperature of nitric acid | Time at temperature (mins) | Discharge capacity percentage of theoretical capacity |
|---|---|---|---|
| 5 | 95 | 15 | 15 |
| 6 | 95 | 15 | 16 |
| 3 | 95 | 15 | 18 |
| 5 | 80 | 15 | 8 |
| 5 | 100 | 15 | 14 |

In each of the examples in Table 2, the active material 18 comprised 17 grammes chemically prepared beta lead dioxide, 7 grammes graphite powder, and 10 grammes PTFE. It can be observed that an optimum temperature is reached at about 95°C. In each example the grain size of the beta lead dioxide was of the order of 50 nm (500 Å).

The proportion of the PTFE in the active material 18 may be varied without affecting the discharge capacity of the active material 18 to any significant extent, as shown in Table 3 below.

TABLE 3

| Percentage by weight PTFE | Percentage by weight graphite powder | Discharge capacity percentage of theoretical capacity |
|---|---|---|
| 0 | 19 | 19* |
| 2 | 20 | 19 |
| 3 | 20 | 12 |
| 5 | 20 | 9 |
| 10 | 20 | 13 |
| 20 | 20 | 15 |

* The active material 18 was shed from the support grid 14 after one complete cycle. However, even a relatively low proportion (e.g. 0.2% by weight) of PTFE has been found sufficient to retain the active material 18 on the support grid 14 during cycling.

Instead of the PTFE being in the form of an aqueous slurry, the PTFE may be mixed with the beta lead dioxide in an alternative manner, for example:—

Beta lead dioxide was mixed with about 0.2% by weight of PTFE and the mixture ground together until a fibrillated mass of active material 18 was obtained. The fibrillated active material 18 was applied to a support grid 14 to form a positive electrode 10. Subsequently, in the cell 24 the positive electrode 10 could be discharged for about 20 minutes (e.g. a current of about 5 mA/cm$^2$ of active material 18) and subsequently charged for about 20 minutes (e.g. a current of about 20 mA/cm$^2$ of active material 18). Such a positive electrode 10 has then been found to have a discharge capacity of about 50 mA Hour/gramme of active material 18 (about 26% of the theoretical capacity when discharged at about 10 mA/cm$^2$ of active material 18).

As an alternative to mixing the chemically prepared lead dioxide with the PTFE and the graphite powder to form an active mass 18 to be applied to a support grid 14, the beta lead dioxide may be used in the well known tubular plate (or Ironclad) lead acid electric storage battery—see for example, "Standard Handbook for Electrical Engineers" pp 24-3 and 4, 10th Edition, published by the McGraw-Hill Book Company, and incorporated by reference herein. In the tubular plate battery, a plurality of parallel lead alloy current collecting rods integral with a cross-piece project vertically downwards into respective permeable tubular containers filled with lead dioxide to form a positive electrode. The tubular containers are usually made from woven glass filaments, or from woven or sintered plastics material, such as Terylene® polyester or PTFE. Thus, the beta lead dioxide prepared by the method of the invention is poured into the annular space between the container wall and the current collecting rod in each tubular container.

The beta lead dioxide may be made by an alternative chemical route, for example:—

Beta lead dioxide was prepared by the hydrolysis of lead tetra-acetate (100 grammes) in glacial acetic acid (1 litre) by one litre of water added over about 4 hours, beta lead dioxide precipitate thereby formed being subsequently washed with water and filtered.

Then 20 grammes of the beta lead dioxide precipitate, 6 grammes graphite powder, and 2.5 ml of an aqueous slurry of PTFE, were mixed with 2.5 ml of water to form an active mass 18 which was applied to a support grid 14 of a positive electrode 10. The positive electrode 10 subsequently yielded 0.75 Amp hour capacity (i.e. 16.7% of the theoretical capacity) at 0.25 amps.

It has been observed that variations in the discharge capacity of the positive electrode may be influenced by differences in the microstructure of the active material 18, although subsequent heating of the beta lead dioxide at 200°C does not appear to have any significant affect on discharge capacity.

The negative electrode 26 may comprise spongy lead 30, or may be made by compacting fine lead metal such as lead wool about a lead support grid 32. Alternatively, particulate lead might be compacted about the support grid 32.

A comparison made between the lead acid electric storage cell 24 provided with a conventional commercial negative electrode 26, and the electric cell 24 provided with a negative electrode 26 made by compacting fine lead metal, had the following results:—

Positive electrode composition
Beta lead dioxide—60 grammes
Binder—PTFE ~8 grammes
graphite powder—14 grammes

Negative electrode
Conventional commercial negative electrode

The electric cell 24 was discharged and yielded 670 mA hr (about 5% of the theoretical capacity). This test was repeated with the negative electrode 26 being replaced by a negative electrode comprising compacted lead wool of the same weight as the lead in the commercial negative electrode. The electric cell 24 when discharged yielded 570 mA hr at a rate of 90 mA.

One advantage of the use together of the positive electrode 10 of the invention and of the negative electrode 26 made by compacting fine lead metal, is that it allows the electric cell 24 to be assembled directly in the charged state, so that the electric cell 24 could be ready for immediate use.

**Claims**

1. A method of making a lead acid electric storage cell comprising the steps of:
(i) chemically preparing particulate beta lead dioxide;
(ii) supporting the beta lead dioxide by a carrier therefor adapted to be located in the cell thereby to fabricate an electrode for the cell;
(iii) assembling a lead acid electric storage cell comprising a positive electrode constituted by said beta lead dioxide electrode, a negative electrode constituted by a second electrode, and an electrolyte for the cell, characterised in that, in step (i), the beta lead dioxide is prepared by reacting trilead tetroxide with nitric acid or by hydrolysing lead tetraacetate in acetic acid and is then mixed with either or both of a binder therefor and a particulate electrically conductive material inert to the electrochemical reactions inside the cell; and, in step (ii), the carrier comprises a permeable, electrically insulating tubular container for the beta lead dioxide and into which container a current collecting means extends, the beta lead dioxide having been mixed with at least the electrically conductive material, or the carrier comprises an electrically conductive support structure, the beta lead dioxide having been mixed with at least the binder.

2. A method according to Claim 1 wherein the second electrode is made by compacting fine lead metal about a carrier therefor and the cell is made in the charged state.

**Patentansprüche**

1. Verfahren zur Herstellung einer bleisauren elektrischen Speicherzelle, bei dem man:
(i) teilchenförmiges beta-Bleidioxid chemisch herstellt,
(ii) das beta-Bleidioxid durch einen Träger stützt, der für die Anbringung in der Zelle angepaßt ist, um dadurch eine Elektrode für die Zelle zu schaffen;
(iii) ein bleisaure elektrische Speicherzelle zusammensetzt, die eine positive Elektrode, die durch die beta-Bleidioxid Elektrode gebildet wird, eine negative Elektrode, die durch eine zweite Elektrode gebildet wird und einen Elektrolyten für die Zelle enthält, dadurch gekennzeichnet, daß in Stufe (i) das beta-Bleidioxid durch Reaktion von Bleimennige mit Salpetersäure oder durch Hydrolyse von Bleitetraacetat in Essigsäure hergestellt wird und anschließend mit einem Bindemittel und/oder einem teilchenförmigen elektrisch leitenden Material, das gegen- über den elektrochemischen Reaktionen innerhalb der Zelle inert ist, vermischt wird, in Stufe (ii) der Träger einen durchlässigen, elektrisch isolierenden röhrenförmigen Behälter für das beta-Bleidioxid aufweist, sich eine Stromsammelvorrichtung in den Behälter erstreckt, das beta-Bleidioxid mindestens mit dem elektrisch leitenden Material vermischt worden ist oder der Träger eine elektrisch leitende Stützstruktur aufweist und das beta Bleidioxid mindestens mit dem Bindemittel vermischt worden ist.

2. Verfahren nach Anspruch 1, bei dem die zweite Elektrode durch Pressen von feinem metallische Blei um einen Träger hergestellt wird und die Zelle im geladenen Zustand hergestellt wird.

**Revendications**

1. Procédé de fabrication d'un accumulateur électrique acide au plomb, comprenant les étapes suivantes:
(i) la préparation chimique de bioxyde de plomb bêta particulaire,
(ii) le support du bioxyde de plomb bêta par un support destiné à être placé dans l'accumulateur afin qu'une électrode soit fabriquée pour l'accumulateur, et
(iii) le montage d'un accumulateur électrique acide au plomb comprenant une électrode positive constituée par l'électrode de bioxyde de plomb bêta, une électrode négative constituée par une seconde électrode, et un électrolyte destiné à l'accumulateur,
caractérisé en ce que, dans l'étape (i), le bioxyde de plomb bêta est préparé par réaction de tétroxyde

de plomb Pb$_3$O$_4$ avec de l'acide nitrique ou par hydrolyse de tétracétate de plomb dans de l'acide acétique, et est alors mélangé avec un liant, avec un matériau particulaire conducteur de l'électricité et inerte vis-à-vis des réactions électrochimiques dans l'accumulateur, ou avec ces deux matériaux, et dans l'étape (ii), le support comporte un récipient tubulaire perméable et isolant de l'électricité destiné à contenir le bioxyde de plomb bêta et dans lequel est disposé un dispositif collecteur de courant le bioxyde de plomb bêta ayant été mélangé au moins au matériau conducteur de l'électricité, où le support comporte une structure de support conductrice de l'électricité, le bioxyde de plomb bêta ayant été mélangé au moins au liant.

2. Procédé selon la revendication 1, dans lequel la seconde électrode est formée par compression de plomb métallique fin autour d'un support correspondant et l'accumulateur este fabriqué à l'état chargé.

Fig.1

Fig.2

*Fig.3.*

CHARGE 30 A/m²

V

2.2

2.0

1.8

DISCHARGE 30 A/m²

V

2.0

1.8

0    30    60    90    120    150

TIME (mins)

EP 0 089 842 B1